# EUROPÄISCHE PATENTSCHRIFT

(11) **EP 3 118 055 B1**
(45) Veröffentlichungstag und Bekanntmachung des Hinweises auf die Patenterteilung: **13.03.2019**
(21) Anmeldenummer: 15176822.3
(22) Anmeldetag: 15.07.2015
(51) Int. Cl.: B60N 2/80, B60N 2/58, B60N 3/02, B60R 7/00

(54) **KOPFSTÜTZE FÜR EINEN FAHRZEUGSITZ**
HEAD REST FOR A VEHICLE SEAT
REPOSE-TETE POUR UN SIEGE DE VEHICULE

(43) Veröffentlichungstag der Anmeldung: 18.01.2017
(73) Patentinhaber: Franz Kiel GmbH, 86720 Nördlingen (DE)
(72) Erfinder: Mill, Jürgen, 73479 Ellwangen (DE)
(74) Vertreter: Schmid, Wolfgang

(56) Entgegenhaltungen:
- JP-A- H08 168 429
- US-A- 3 608 964
- US-A- 5 015 036

## Beschreibung

Die Erfindung betrifft eine Kopfstütze für einen Fahrzeugsitz, mit einem Kopfstützenkörper und einem den Kopfstützenkörper zumindest teilweise umgebenden Kopfstützenbezug, nach der im Oberbegriff von Anspruch 1 näher definierten Art.

Eine gattungsgemäße Kopfstütze ist aus der US 3,608,964 bekannt. Hierbei wird mittels eines elastischen Bands ein Kissen an der Kopfstütze angebracht, so dass eine den mit der Kopfstütze ausgestatteten Sitz benutzende Person ihren Kopf entsprechend abstützen kann.

Einen ähnlichen Stand der Technik beschreibt auch die US 5,015,036. Solche Kopfstützen finden sowohl bei PKW-Sitzen als auch bei Fahrgastsitzen in Bussen, Zügen, Flugzeugen und anderen Verkehrsmitteln Anwendung.

Während sich bei Fahrgastsitzen an der Rückseite der Kopfstütze in früheren Jahren häufig Aschenbecher befanden, ist aufgrund des Rauchverbots in öffentlichen Verkehrsmitteln ein Trend zu erkennen, diese Aschenbecher wegzulassen und stattdessen an der Rückseite der Kopfstütze klappbare Tische oder ähnliches anzubringen. Teilweise ist dies auch dem Bedarf geschuldet, mobile Geräte, wie zum Beispiel Tablets oder Smartphones, im hinteren Bereich der Kopfstütze anzubringen, so dass ein Passagier, der auf dem sich hinter dem betreffenden Fahrgastsitz befindenden Fahrgastsitz sitzt, ein solches Tablet nutzen kann.

Beispiele für Vorrichtungen zum Halten von Tablets oder ähnlichen Geräten an Fahrzeugsitzen sind beispielsweise in der DE 10 2011 115 158 A1, der DE 10 2012 112 942 A1 oder der DE 20 2013 100 414 U1 beschrieben. Sämtliche dieser bekannten Vorrichtungen sind jedoch sehr aufwändig was die Verwendung der eingesetzten Bauteile und deren Montage anbelangt und sie sind meist auch äußerst aufwändig zu bedienen. Dadurch werden diese Vorrichtungen häufig nur bei höherwertigen Fahrzeugen bzw. Verkehrsmitteln eingesetzt und auch dort ist deren tatsächliche Verwendung nicht sehr weit verbreitet.

Es ist daher Aufgabe der vorliegenden Erfindung, eine Kopfstütze für einen Fahrzeugsitz zu schaffen, die einen möglichst einfachen Aufbau besitzt und an der unterschiedliche Gegenstände auf einfache Weise angebracht werden können.

Erfindungsgemäß wird diese Aufgabe durch die in Anspruch 1 genannten Merkmale gelöst.

Durch das erfindungsgemäße, streifenförmige, in einer im Wesentlichen horizontalen Richtung verlaufende, elastische Band, das zumindest an einem Abschnitt seines oberen Endes nicht mit dem Kopfstützenkörper und/oder dem Kopfstützenbezug verbunden ist, ist es möglich, Gegenstände zwischen dem elastischen Band und dem Kopfstützenkörper einzuklemmen, so dass diese zum einen sicher gehalten und zum anderen für eine sich hinter der Kopfstütze befindende Person sehr leicht zugänglich sind. Insbesondere kann ein Tablet, das in einer dafür geeigneten Umhüllung bzw. einem Cover aufgenommen ist, durch das elastische Band gehalten werden, so dass eine sich hinter der Kopfstütze befindende Person das Tablet sowohl bedienen als auch beispielsweise einen Film darauf betrachten kann.

Die Anbringung des Gegenstands an einer Kopfstütze ist insbesondere zur Halterung von Tablets oder Smartphones sehr gut geeignet, da sich die Kopfstütze im Gegensatz zu anderen Haltevorrichtungen, wie beispielsweise Netzen, die sich im unteren Bereich eines Fahrgastsitzes befinden, auf Augenhöhe des dahinter sitzenden Passagiers befindet.

Ein besonderer Vorteil des erfindungsgemäßen, elastischen Bands ist dessen einfache Bedienbarkeit, da dasselbe lediglich ein stückweit von dem Kopfstützenkörper weggezogen werden muss, um den gewünschten Gegenstand zwischen dem elastischen Band und dem Kopfstützenkörper einzuklemmen. Im Gegensatz zu anderen Lösungen gemäß dem Stand der Technik weist das elastische Band eine sehr einfache Konstruktion auf und kann mit einfachen Mitteln im Bedarfsfall auch nachgerüstet werden. Die Kosten für das elastische Band sind gegenüber bekannten Lösungen sehr niedrig, was eine weite Verbreitung der erfindungsgemäßen Lösung unterstützt.

Dadurch, dass das elastische Band lediglich an seinen seitlichen Enden mit dem Kopfstützenkörper und/oder dem Kopfstützenbezug verbunden ist, stellt dies einerseits ausreichende Verbindung des elastischen Bands mit dem Kopfstützenkörper bzw. dem Kopfstützenbezug dar und ermöglicht andererseits eine Nutzung des elastischen Bands über seine gesamte Breite.

Eine sehr einfache Anbringung des elastischen Bands ergibt sich, wenn dasselbe mit dem Kopfstützenbezug vernäht ist.

Es ist vorgesehen, dass das elastische Band mittels zweier Halteelemente mit dem Kopfstützenkörper verbunden ist. Beispielsweise kann das elastische Band dabei zwischen den Halteelementen und dem Kopfstützenkörper eingeklemmt sein.

Da insbesondere bei öffentlichen Verkehrsmitteln, wie Bussen oder Zügen, Passagiere auch im Stehen transportiert werden, ist vorgesehen, dass die Halteelemente jeweilige Haltegriffe aufweisen. Auf diese Weise ergibt sich eine Doppelfunktion der Halteelemente.

Wenn in einer weiteren vorteilhaften Ausgestaltung der Erfindung das elastische Band eine geschlossene Oberfläche aufweist, so ergibt sich eine besonders sicher Halterung der Gegenstände durch das elastische Band.

Wenn des Weiteren das elastische Band eine Höhe von mindestens 25 mm aufweist, so wird ein zu starkes Durchbiegen bzw. Durchhängen des elastischen Bands vermieden, wodurch die Gegenstände noch sicherer gehalten werden können.

Ein Fahrzeugsitz mit einer Sitzfläche, einer Rückenlehne und einer erfindungsgemäßen Kopfstütze ist in Anspruch 9 angegeben.

Besonders vorteilhaft ist es, wenn die Kopfstütze einteilig mit der Rückenlehne ausgebildet ist.

Nachfolgend ist die Erfindung anhand von Zeichnungen prinzipmäßig dargestellt.

Es zeigt:
- Fig. 1: eine sehr schematische Seitenansicht eines Fahrzeugsitzes mit einer erfindungsgemäßen Kopfstütze;
- Fig. 2: eine Ansicht einer erfindungsgemäßen Kopfstütze gemäß dem Pfeil II aus Fig. 1;
- Fig. 3: die Kopfstütze aus Fig. 2 mit einem ersten, an dem elastischen Band der Kopfstütze gehaltenen Gegenstand;
- Fig. 4: die Kopfstütze aus Fig. 2 mit einem zweiten, an dem elastischen Band der Kopfstütze gehaltenen Gegenstand;
- Fig. 5: die Kopfstütze aus Fig. 2 mit einem dritten, an dem elastischen Band der Kopfstütze gehaltenen Gegenstand;
- Fig. 6: die Kopfstütze aus Fig. 2 mit einem vierten, an dem elastischen Band der Kopfstütze gehaltenen Gegenstand; und
- Fig. 7: eine nicht erfindungsgemäße Kopfstütze.

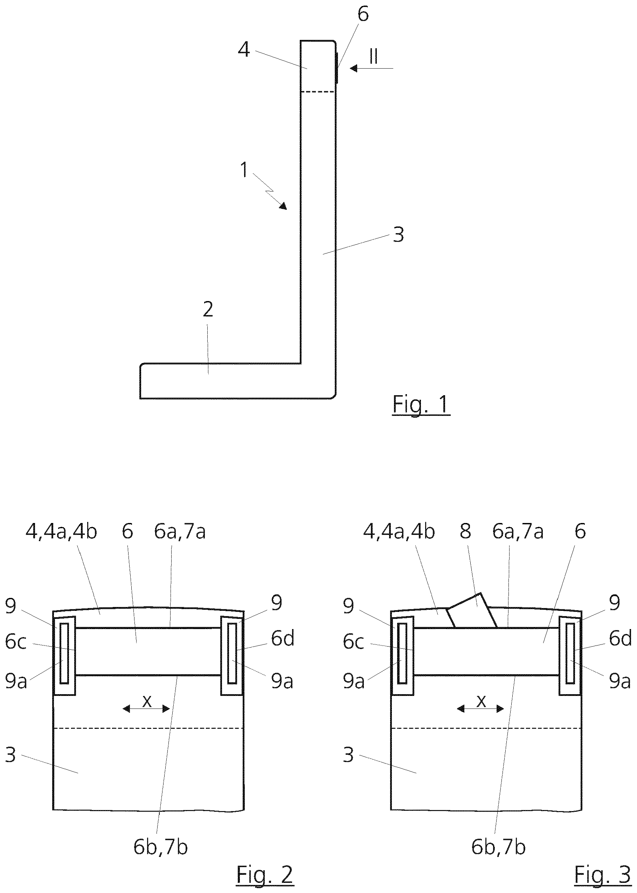

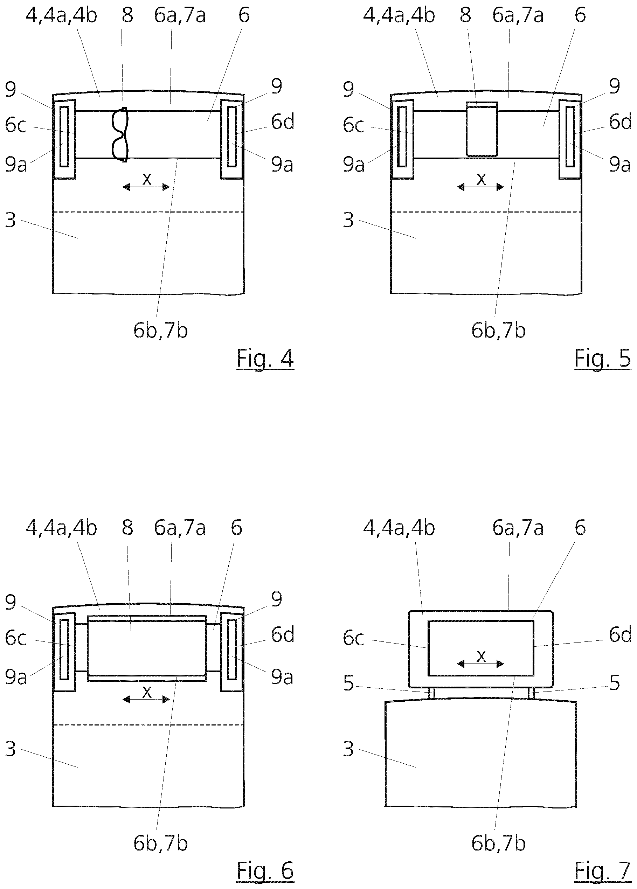

Fig. 1 zeigt einen Fahrzeugsitz 1, der eine Sitzfläche 2, eine Rückenlehne 3 und eine Kopfstütze 4 aufweist. Die Kopfstütze 4 ist im dargestellten Ausführungsbeispiel einteilig mit der Rückenlehne 3 ausgebildet. Dabei ist mittels einer gestrichelten Linie eine virtuelle Grenze bzw. Trennlinie zwischen der Kopfstütze 4 und der Rückenlehne 3 eingezeichnet. Grundsätzlich wird im Falle von Fig. 1 der Bereich, an dem eine durchschnittlich große Person ihren Kopf anlegt, als Kopfstütze 4 angesehen. Es ist jedoch auch möglich, die Kopfstütze 4 mittels in dem Ausführungsbeispiel von Fig. 7 dargestellter Verbindungsstangen 5 mit der Rückenlehne 3 zu verbinden. In diesem Fall stellt die Kopfstütze 4 ein von der Rückenlehne 3 unabhängiges Bauteil dar.

Fig. 2 zeigt eine Ansicht der Kopfstütze 4 gemäß dem Pfeil II aus Fig. 1. Dabei weist die Kopfstütze 4 einen Kopfstützenkörper 4a und einen Kopfstützenbezug 4b auf, der den Kopfstützenkörper 4a zumindest teilweise umgibt. Für den Kopfstützenkörper 4a und den Kopfstützenbezug 4b, die in den Figuren nicht detailliert dargestellt sind, können im Prinzip beliebige Materialien verwendet werden.

Des Weiteren weist die Kopfstütze 4 ein elastisches Band 6 auf, das streifenförmig ausgeführt ist und in einer im Wesentlichen horizontalen Richtung x von einer Seite der Kopfstütze 4 zu der gegenüberliegenden Seite derselben verläuft. Das elastische Band 6 ist an zwei voneinander beabstandeten Positionen des Kopfstützenkörpers 4a angebracht. Das elastische Band 6 weist ein oberes Ende bzw. einen oberen Rand 6a, ein unteres Ende bzw. einen unteren Rand 6b sowie zwei seitliche Enden bzw. Ränder 6c und 6d auf. In der in den Figuren 2 bis 6 dargestellten Ausführungsform der Kopfstütze 4 ist das elastische Band 6 lediglich an seinen seitlichen Enden 6c und 6d mit dem Kopfstützenkörper 4a verbunden. An dem oberen Ende 6a sowie dem unteren Ende 6b ist das elastische Band 6 dagegen nicht mit dem Kopfstützenkörper 4a verbunden, so dass an dem oberen Ende 6a durch entsprechendes Wegziehen des elastischen Bands 6 eine Öffnung 7a zwischen dem elastischen Band 6 und dem Kopfstützenkörper 4a erzeugbar ist, in die ein in den Figuren 3 bis 6 dargestellter Gegenstand 8 eingeschoben werden kann. In ähnlicher Weise ist an dem unteren Ende 6b eine Öffnung 7b zwischen dem elastischen Band 6 und dem Kopfstützenkörper 4a erzeugbar, wodurch die Gegenstände durch die untere Öffnung 7b aus dem Bereich zwischen dem elastischen Band 6 und der Kopfstütze 4 hinausgeschoben werden können und auf diese Weise auch Gegenstände 8 mittels des elastischen Bands an der Kopfstütze 4 gehalten werden können, die länger sind als die Höhe des elastischen Bands 6. In diesem Zusammenhang beträgt die Höhe des elastischen Bands 6 vorzugsweise mindestens 25 mm. Im vorliegenden Fall ist die Höhe des elastischen Bands 6 jedoch wesentlich größer. In den Figuren ist ebenfalls zu erkennen, dass das elastische Band 6 eine geschlossene Oberfläche aufweist, was eine sichere Anbringung bzw. Halterung des jeweiligen Gegenstands 8 gewährleistet.

Die Verbindung des elastischen Bands 6 mit dem Kopfstützenkörper 4a erfolgt im vorliegenden Fall mittels zweier, die seitlichen Enden 6c und 6d des elastischen Bands 6 an dem Kopfstützenkörper 4a fixierender Halteelemente 9. Die Halteelemente 9 können beispielsweise mit dem Kopfstützenkörper 4a verschraubt sein. Dadurch kann sich eine gewisse Klemmwirkung für das elastische Band ergeben. Zusätzlich können an den Halteelementen 9 und/oder an dem Kopfstützenkörper 4a Haken, beispielsweise aus Metall oder Kunststoff, vorgesehen sein, in die das elastische Band 6 eingehängt werden kann. Auch ein Spanndraht kann zur Verbindung des elastischen Bands 6 mit den Halteelementen 9 und/oder dem Kopfstützenkörper 4a vorgesehen sein. Des Weiteren kann eine Lasche oder ähnliches mit dem elastischen Band 6 vernäht werden, um dieses, beispielsweise an den oben genannten Haken, anzubringen. Des Weiteren kann an dem Kopfstützenkörper 4a ein Stift vorgesehen sein, an dem das elastische Band 6 eingehängt werden kann. Grundsätzlich kommt auch Kleben in Frage, allerdings nur, wenn dadurch ein ausreichender Halt des elastischen Bands 6 gewährleistet ist. Hierbei weisen die Halteelemente 9 im vorliegenden Fall jeweilige Haltegriffe 9a auf, an denen sich beispielsweise in dem Fahrzeug stehende Personen festhalten können.

Bei dem Gegenstand 8, das bei der Ausführungsform von Fig. 3 mittels des elastischen Bands 6 an der Kopfstütze 4 gehalten wird, handelt es sich um ein Prospekt. In Fig. 4 ist dargestellt, dass auch eine Brille als Gegenstand 8 beispielsweise durch Einführen eines Bügels derselben in die Öffnung 7a zwischen dem elastischen Band 6 und dem Kopfstützenkörper 4a eingeschoben und dadurch mittels des elastischen Bands 6 an der Kopfstütze 4 gehalten werden kann. Wie in Fig. 5 dargestellt ist, lässt sich auch ein Smartphone als Gegenstand 8 mittels des elastischen Bands 6 an der Kopfstütze 4 halten, wenn das Smartphone in einer entsprechenden Umhüllung untergebracht ist, deren Deckel dann in die Öffnung 7a zwischen dem elastischen Band 6 und dem Kopfstützenkörper 4a eingeschoben wird. In ähnlicher Weise verhält es sich mit einem in Fig. 6 dargestellten Tablet als Gegenstand 8. Insbesondere bei der Befestigung eines Tablets bzw. der das Tablet haltenden Umhüllung bzw. eines das Tablet haltenden Covers in die Öffnung 7a zwischen dem elastischen Band 6 und dem Kopfstützenkörper 4a kann ein sich hinter dem Fahrzeugsitz 1 befindender Passagier auf dem Tablet beispielsweise Videos betrachten und gegebenenfalls sogar arbeiten. In Fig. 6 ist außerdem zu erkennen, dass das Cover des Tablets größer ist als die Höhe des elastischen Bands 6. Durch die am unteren Ende 6b des elastischen Bands 6 herstellbare Öffnung 7b kann das Cover des Tablets jedoch vollständig in den Zwischenraum zwischen dem elastischen Band 6 und dem Kopfstützenkörper 4a eingeschoben werden. Durch den horizontalen Verlauf des elastischen Bands 6 richtet sich das Smartphone bzw. das Tablet exakt horizontal aus. Des Weiteren wird auf diese Weise ein sicherer Halt des Gegenstands 8 an der Kopfstütze 4 gewährleistet.

In Fig. 7 ist eine nicht zur Erfindung gehörende Kopfstütze 4 dargestellt. Neben der Tatsache, dass die Kopfstütze 4 nicht einteilig mit der Rückenlehne 3 ausgebildet, sondern über die Verbindungsstäbe 5 mit derselben verbunden ist, besteht ein weiterer Unterschied zu der Ausführungsform gemäß der Figuren 2 bis 6 darin, dass das elastische Band 6 an dem Kopfstützenbezug 4b angebracht ist. In diesem Fall kann das elastische Band 6 beispielsweise mit dem Kopfstützenbezug 4b vernäht werden, wobei auf die Halteelemente 9 verzichtet werden kann. Ein Vernähen des elastischen Bands 6 mit dem Kopfstützenbezug 4b ist auch bei der Ausführungsform gemäß der Figuren 2 bis 6 möglich, und zwar alternativ oder zusätzlich zu den Halteelementen 9. Auch bei der Kopfstütze von Fig. 7 ist es möglich und auch zu bevorzugen, lediglich die beiden seitlichen Enden 6c und 6d mit dem Kopfstützenbezug 4b zu verbinden, so dass am oberen Ende 6a des elastischen Bands 6 die Öffnung 7a und an dem unteren Ende 6b des elastischen Bands 6 die Öffnung 7b erzeugt werden kann.

Bei nicht zur Erfindung gehörenden Kopfstützen ist es gegebenenfalls auch möglich, das elastische Band 6 an dem unteren Ende 6b mit dem Kopfstützenkörper 4a und/oder dem Kopfstützenbezug 4b zu verbinden, so dass lediglich an dem oberen Ende 6a die Öffnung 7a hergestellt werden kann. Des Weiteren ist es auch möglich, das elastische Band 6 an dem oberen Ende 6a und/oder an dem unteren Ende 6b teilweise mit dem Kopfstützenkörper 4a und/oder mit dem Kopfstützenbezug 4b zu verbinden, so dass lediglich ein Abschnitt des oberen Endes 6a und/oder des unteren Endes 6b mit dem Kopfstützenkörper 4a und/oder dem Kopfstützenbezug 4b verbunden ist. Dies kann für bestimmte Gegenstände 8 ausreichen, um diese mittels des elastischen Bands 6 an der Kopfstütze 4 anzubringen.

## Patentansprüche

1. Kopfstütze (4) für einen Fahrzeugsitz (1), mit einem Kopfstützenkörper (4a), mit einem den Kopfstützenkörper (4a) zumindest teilweise umgebenden Kopfstützenbezug (4b), und mit einem streifenförmigen, in einer im Wesentlichen horizontalen Richtung (x) verlaufenden, elastischen Band (6), wobei das elastische Band (6) zumindest an einem Abschnitt seines oberen Endes (6a) nicht mit dem Kopfstützenkörper (4a) und/oder dem Kopfstützenbezug (4b) verbunden ist, so dass eine Öffnung (7a) zwischen dem elastischen Band (6) und dem Kopfstützenkörper (4a) und/oder dem Kopfstützenbezug (4b) erzeugbar ist, wobei das elastische Band (6) an zwei voneinander beabstandeten Positionen des Kopfstützenkörpers (4a) und/oder des Kopfstützenbezugs (4b) angebracht ist, wobei das elastische Band (6) zwei seitliche Enden (6c,6d) aufweist, und wobei das elastische Band (6) lediglich an den seitlichen Enden (6c,6d) mit dem Kopfstützenkörper (4a) und/oder dem Kopfstützenbezug (4b) verbunden ist,
**dadurch gekennzeichnet, dass** das elastische Band (6) mittels zweier Halteelemente (9) mit dem Kopfstützenkörper (4a) verbunden ist und dass die Halteelemente (9) jeweilige Haltegriffe (9a) aufweisen.

2. Kopfstütze nach Anspruch 1, **dadurch gekennzeichnet, dass** das elastische Band (6) mit dem Kopfstützenbezug (4b) vernäht ist.

3. Kopfstütze nach einem der Ansprüche 1 oder 2, **dadurch gekennzeichnet, dass** das elastische Band (6) eine geschlossene Oberfläche aufweist.

4. Kopfstütze nach einem der Ansprüche 1 - 3, **dadurch gekennzeichnet, dass** das elastische Band (6) eine Höhe von mindestens 25 mm aufweist.

5. Fahrzeugsitz (1) mit einer Sitzfläche (2), mit einer Rückenlehne (3) und mit einer Kopfstütze (4) nach einem der Ansprüche 1 - 4.

6. Fahrzeugsitz nach Anspruch 5, **dadurch gekennzeichnet, dass** die Kopfstütze (4) einteilig mit der Rückenlehne (3) ausgebildet ist.

## Claims

1. Head rest (4) for a vehicle seat (1), having a head rest body (4a), having a head rest cover (4b) which at least partially surrounds the head rest body (4a), and having a strip-shaped elastic strap (6) which runs in a substantially horizontal direction (x),
wherein the elastic strap (6), at least at a portion of the upper end (6a) thereof, is not connected to the head rest body (4a) and/or the head rest cover (4b), such that an opening (7a) can be produced between the elastic strap (6) and the head rest body (4a) and/or the head rest cover (4b),
wherein the elastic strap (6) is fitted at two spaced-apart positions of the head rest body (4a) and/or of the head rest cover (4b),
wherein the elastic strap (6) has two lateral ends (6c, 6d), and wherein the elastic strap (6) is connected to the head rest body (4a) and/or the head rest cover (4b) merely at the lateral ends (6c, 6d), **characterized in that** the elastic strap (6) is connected to the head rest body (4a) by means of two holding elements (9), and **in that** the holding elements (9) have respective handles (9a).

2. Head rest according to Claim 1,
**characterized in that**
the elastic strap (6) is sewn to the head rest cover (4b).

3. Head rest according to either of Claims 1 and 2,
**characterized in that**
the elastic strap (6) has a closed surface.

4. Head rest according to one of Claims 1-3,
**characterized in that**
the elastic strap (6) has a height of at least 25 mm.

5. Vehicle seat (1), having a seating surface (2), having a backrest (3), and having a head rest (4) according to one of Claims 1-4.

6. Vehicle seat according to Claim 5,
**characterized in that**
the head rest (4) is formed in one piece with the backrest (3).

## Revendications

1. Appui-tête (4) pour un siège de véhicule (1), avec un corps d'appui-tête (4a), avec une housse d'appui-tête (4b) entourant au moins partiellement le corps de l'appui-tête (4a), et avec une bande élastique (6) en forme de bande, se déroulant selon une direction sensiblement horizontale (x), dans lequel ladite bande élastique (6), n'est pas liée, au moins à une section de son extrémité supérieure (6a), avec le corps d'appui-tête (4a) et/ou la housse d'appui-tête (4b), de telle manière qu'une ouverture (7a) peut apparaître entre la bande élastique (6) et le corps d'appui-tête (4a) et/ou de la housse d'appui-tête (4b), dans lequel, la bande élastique (6) est fixée à deux positions éloignées du corps d'appui-tête (4a) et/ou de la housse d'appui-tête (4b),
dans lequel la bande élastique (6) présente deux extrémités latérales (6c, 6d), et dans lequel la bande élastique (6) est liée uniquement aux extrémités latérales (6a, 6d) avec le corps d'appui-tête (4a) et/ou la housse d'appui-tête (4b),
**caractérisé en ce que**, la bande élastique (6) est reliée au moyen de deux éléments de maintien (9) avec le corps d'appui-tête (4a) et **en ce que** les éléments de maintien (9) comprennent des poignées respectives (9a).

2. Appuie-tête selon la revendication 1, **caractérisé en ce que** la bande élastique (6) est cousue à la housse d'appui-tête (4b).

3. Appuie-tête selon l'une des revendications 1 ou 2, **caractérisé en ce que** la bande élastique (6) comporte une surface supérieure fermée.

4. Appuie-tête selon l'une des revendications 1 - 3, **caractérisé en ce que** la bande élastique (6) a une hauteur d'au moins 25 mm.

5. Siège (1) de véhicule avec une assise (2), avec un dossier (3) et avec un appui-tête selon l'une des revendications 1-4.

6. Siège (1) de véhicule selon la revendication 5, **caractérisé en ce que** l'appui-tête (4) est réalisé d'une pièce avec le dossier (3).
